# EUROPEAN PATENT SPECIFICATION

(11) **EP 1 830 948 B1**
(45) Date of publication and mention of the grant of the patent: **22.05.2019**
(21) Application number: 05823598.7
(22) Date of filing: 28.12.2005
(51) Int. Cl.: B01J 8/22, C10G 2/00

(54) **REACTOR FOR SOLID/LIQUID/GAS REACTIONS**
REAKTOR ZUR DURCHFÜHRUNG VON FEST/FLÜSSIG/GAS REAKTIONEN
RÉACTEUR POUR DES RÉACTIONS SOLIDE/LIQUIDE/GAZ

(30) Priority: 31.12.2004 EP 04107080
(43) Date of publication of application: 12.09.2007
(73) Proprietor: Shell Internationale Research Maatschappij B.V., 2596 HR The Hague (NL)
(72) Inventor: SCHRAUWEN, Franciscus, Johannes, Maria, NL-1031 CM Amsterdam (NL)
(74) Representative: Shell Legal Services IP
(86) International application number: PCT/EP2005/057197
(87) International publication number: WO 2006/070005

(56) References cited:
- WO-A-02/096835
- WO-A-2005/035108
- WO-A-2005/065813
- WO-A-2005/075065
- US-A- 2 853 369
- US-A- 6 060 524

## Description

The present invention relates to a reactor for carrying out a chemical reaction in a three phase slurry system, in particular a reactor suitable for Fischer Tropsch reactions.

The Fischer-Tropsch process can be used for the conversion of hydrocarbonaceous feedstocks into liquid and/or solid hydrocarbons. The feedstock (e.g. natural gas, associated gas coal-bed methane, residual (crude) oil fractions, biomass and/or coal) is converted in a first step into a mixture of hydrogen and carbon monoxide (this mixture is often referred to as synthesis gas or syngas). The synthesis gas is then converted in a second step over a suitable catalyst at elevated temperature and pressure into paraffinic compounds ranging from methane to high molecular weight molecules comprising up to 200 carbon atoms, or, under particular circumstances, even more.

Numerous types of reactor systems have been developed for carrying out the Fischer-Tropsch reaction. For example, Fischer-Tropsch reactor systems include fixed bed reactors, especially multi tubular fixed bed reactors, fluidised bed reactors, such as entrained fluidised bed reactors and fixed fluidised bed reactors, and slurry bed reactors such as three-phase slurry bubble columns and ebullated bed reactors.

The typical design of a commercial three phase slurry reactor is an elongated reactor shell. Trying to increase the reactor diameter to provide larger throughput makes achieving a uniform gas distribution of the suspension much more difficult. In any reaction, the rate of conversion of reactants to products and the products specification depend heavily on achieving a correct hydrostatic equilibrium of the mixture of the components. The larger the reactor, the more critical the mixing characteristics become. At points of low resistance and favoured gas outflow, the gas moving through the reactor will move more quickly through the liquid. Thus the hydrostatic equilibrium becomes disturbed, and the residence time of the gas becomes non-uniform. This results in a rolling motion of the liquid, and the creation of eddies and back mixing.

In fully backmixed reactors, the intention is for the composition of the reactants and products and catalyst to be identical at every point within the reactors. However, fully backmixed systems show a relatively low productivity per volume of reactor, as the backmixing of the gas phase, and especially the liquid phase, results in decrease of the kinetic driving force of the reaction. More control of the reactants, i.e. towards plug flow, would increase productivity for a given reactor volume.

Another factor to be considered in the scaling up of reactor size and volume is the tendency of gases to move to the centre of the liquid, and the tendency of the liquid to move along the walls, again decreasing the homogeneous mixing, and again leading to the creation of eddies.

The uncontrollable rolling movement of the liquid can be avoided by building-in vertical shafts open at the top and bottom and having a honeycombed cross section. They can be located at a sufficient height above the gas distributor so that the suspension can communicate freely, and they open into a common gas chamber in the upper part of the reactor. The gas is introduced either into each shaft individually or by a gas injector centrally mounted in the cone-shaped bottom of the reactor. GE 958020 discloses a honeycomb insert, whilst US Patents No. 5,384,336 and 5,520,890 purpose a multitubular reactor with large defined channels.

In US 2,853,369 a slurry reactor is described which is divided into relatively small slurry zones by means of a honeycomb-like structure. It is mentioned in column 2, line 30 that increasing the diameter of a slurry reactor to sizes above 20 cm results in vertical rotation of the slurry, while the conversion goes down. For that reason, the large slurry zone is divided into small compartments. In column 4, line 5 it is indicated that these compartments result in a situation which corresponds with individual shafts of less than 20 cm. For a large reactor this would mean a large and heavy internal structure.

It is one object of the present invention to provide an improved reactor.

Accordingly, the present invention provides a reactor for carrying out a chemical reaction in a three phase slurry system, the reactor comprising:
(a) a reaction vessel having a freeboard zone and a slurry zone, the slurry zone having a diameter of at least 0.5 m, suitably at least 0.75 m, preferably greater than 1 m, more preferably greater than 2 m, and a height of at least 5 m preferably at least 10 m,
(b) a gas inlet means at or near the bottom of the reaction vessel,
(c) a gas outlet at or near the top of the reaction vessel,
(d) a plurality of vertical pipes within the slurry zone, the pipes having a diameter of from about 1 cm to about 20 cm, and a total perimeter of from about 1000 to about 4000 cm/m², one or more of the vertical pipes including a heat transfer medium; and optionally
(e) a liquid outlet means.

The provision of sufficient vertical pipes in a reaction vessel or in a slurry zone of a size having a diameter of at least 0.5 m and a height of at least 5 m and in the absence of any structural arrangement to divide the reactor or the zone into two or more individual and separated compartments over more than 50% of the slurry zone height, e.g. more than 80% of the height, has been found not only to suppress the tendency of preferred gas flow streams through the liquid and the formation of rolling motions at the slurry, but also to reduce and possibly prevent large scale backmixing of the gas phase, and especially the liquid phase, in the reaction vessel. The term "vertical" corresponds with "parallel with the central axis of the reactor".

Preferably, the diameter of each vertical pipe is from about 1 to about 10 cm, more preferably from about 2 to about 5cm.

Preferably, the total perimeter of the vertical pipes is between 1300 and 3600 cm/m², more preferably from about 1600 to about 3200 cm/m².

Due to the presence of the guidance pipes, the gas phase dispersion decrease considerably. This corresponds with the conversion of a stirred reactor into a plug flow reactor. For reactions with a reaction order above zero, e.g. the Fischer-Tropsch reaction, this increases the reactor productivity. In general, the gas phase Peclet value for the slurry zone in the present invention (Pe = Ug H/D) will be at least 0,2 and is preferably at least 0.5, more preferably at least 1.0 and most preferably at least 2.0. Further, the gas phase dispersion coefficient (m²/s) is suitably less than 1, preferably less than 0.5, more preferably between 0.1 and 0.3.

In one embodiment of the present invention, the gas inlet means comprises one or more gas introduction ports in the reaction vessel. The gas introduction port or ports may be at more than one vertical level of the reaction vessel.

Preferably, the gas inlet means provides introduction of the gas wholly or substantially evenly across the bottom end of the reaction vessel, and more preferably as close to the bottom of the reaction vessel as possible. This assists suppression of preferred gas flow streams, rolling of the slurry, and prevention of backmixing of the gas phase and the liquid phase.

In general the pipes will be arranged regularly and evenly over the reactor diameter, e.g. as regular triangles, regular squares, regular honeycombs etc. The pipes will be placed in the reactor at a distance of 0,5 or 1 m above the bottom of the reactor. The pipes suitably will be present till the top of the expanded slurry bed, preferably to about 0.5 or 1 m below the top of the slurry bed. However, longer pipes may be used.

The gas inlet means may include a sparger system. The sparger system is typically useful in reactors for carrying out exothermic reactions. The sparger is suitably placed at the lower end of the reactor in the slurry zone. The slurry zone comprises at least the slurry liquid. Above the slurry zone is the freeboard zone, which is especially used to obtain a good separation of the slurry and the outflowing gas stream. The gas exit is suitably at a high, or even the highest, level in the freeboard zone.

Typically the sparger outlet is disposed as close as possible to the floor of the reactor, typically at a distance of 20cm or less, and more preferably at a distance of 10cm or less.

In certain embodiments the sparger outlet is located at the end of the sparger which is in turn at the end of a distribution conduit feeding the gas to the sparger.

Typically the gas outlet is adapted to eject gas across the floor of the reactor.

Sweeping the floor of the reactor with the gas ejected from the sparger outlet has the advantage of enhancing the distribution of the catalyst within the main reactor, improving mixing in the bottom of the reactor, which is beneficial for the transfer of heat to any cooling system and avoids local hot spots. It also disperses any particles of catalyst from the floor, which avoids localised build-up of catalyst and localised hotspots that can occur in that zone as a result.

The present invention also covers the situation in which several slurry zones are present in one and the same reactor, e.g. a situation as described in US 5,520,890. In this reference a large reactor shell is described enclosing e.g. twelve (see Figure) slurry reactor zones. Each of these slurry reactor zones is to be considered as a separate slurry zone as described in the main claim. In this situation the common freeboard zone for all slurry zones is the freeboard zone as intended in the main claim. The present invention also covers the situation in which a very large reactor is divided into large compartments by screens. In that case each compartment is to be considered as the slurry zone as described in the main claim. In this situation there will be gas inlet means at or near the bottom of each slurry zone. Thus, the present invention also covers the situation in which the reactor comprises two or more slurry zones. It is observed that an individual slurry zone of the sizes as described in the claims in general only comprises the plurality of vertical guidance pipes. It does not contain any plates, screens, shields, panels etc. that the slurry zone further divide into smaller compartments.

In the case that any means are present to divide a larger zone into smaller compartments, these smaller compartments are the slurry zones as mentioned in claim 1. The (or each) slurry zone may comprise one or more relatively small internals, for instance additional gas entrances measuring equipment, a liquid filter etc. However, these internals do not divide the slurry zone in any smaller compartments.

In reactors that are particularly adapted for carrying out exothermic reactions, and which have cooling means to control the heat generated as a result of the exothermic reactions, the sweeping of the catalyst from the floor of the reactor therefore circulates the catalyst in the slurry zone above the sparger outlets, where coolant circulation tubes normally predominate in such reactors, so that most of the exothermic reactions occur in zones of the reactor that are dense in coolant circulation tubes. This facilitates the control of the reaction and reduces the liability for hotspots in areas that are uncontrolled by cooling means.

Typically the gas outlets of a sparger system are disposed parallel to or directed towards the lower inner surface of the reactor. Each sparger device typically has a number of outlets (e.g. 6-12) directed outwardly from a sparger head, and the outlets are typically arranged equidistantly from one another around the periphery of the sparger head such that gas jets leaving the outlets sweep the surrounding area of the reactor uniformly. It would be possible for the gas jet from the outlet to be oriented directly towards the floor surface in some embodiments.

The sparger heads are typically spaced apart from one another on the floor of the reactor in a regular pattern. The pattern and density of the sparger heads, and the speed of the gas jets leaving the sparger heads are typically selected so that the gas jets have sufficient radial penetration into the slurry surrounding the heads to ensure sufficient coverage of the reactor cross-section, but also so that the gas injection velocity is limited to avoid catalyst attrition.
In another embodiment of the present invention, one or more, preferably all, of the vertical pipes also provide a heat transfer action into or out of the reaction vessel. For this, the vertical pipes could include a transfer medium. For exothermic chemical reactions, the heat transfer action is generally cooling, and typical heat transfer mediums therefore include water, steam, a combination of same, or oil. For endothermic reactions, the heat transfer medium is a heating medium including water, steam, oil or a combination of same, or oil.

Where the vertical pipes are intended to convey a medium therein, there could be included a manifold area or chamber at one or both ends of the vertical pipes, and optionally either within or without the reaction vessel. In one embodiment, the reaction vessel includes a bottom and/or a top plate, sheet or 'head' i.e. perforated plates which create a general collective area either at all the inlets or at outlets or at both ends of the pipes.

Preferably, the reactor is a three phase slurry bubble column, in which the solid particles are held in suspension in a liquid phase by the energy provided by the introduction of the gas phase at the bottom end of the reaction vessel. Preferably the reactor has the shape of a cylindrical vessel, with a bottom and an upper dome in the shape of a half sphere or a flattered half sphere. In use the central axis of the cylinder will be vertical.

Three-phase slurry bubble column reactors generally offer advantages over the fixed-bed design in terms of heat transfer characteristics. Such reactors typically incorporate small catalyst particles suspended by upward flowing gas in a liquid continuous matrix. In the case of multi-tubular reactors, the number of tubes incorporated is generally limited by mechanical parameters. The motion of the continuous liquid matrix allows sufficient heat transfer to achieve a high commercial productivity. The catalyst particles are moving within a liquid continuous phase, resulting in efficient transfer of heat generated from catalyst particles to the cooling surfaces, while the large liquid inventory in the reactor provides a high thermal inertia, which helps prevent rapid temperature increases that can lead to thermal runaway.

The vertical pipes could be arranged in the form of at least one (optionally removable) cooling module, comprising
a coolant feed tube;
a distribution chamber;
a plurality of circulation tubes; and
a collection chamber.

The coolant feed tube could have at its first end an inlet, for charging the cooling module with coolant, and communicating with said distribution chamber at its second end. Each circulation tube could communicate with the distribution chamber through a first end, and communicate with the collection chamber through a second end.

The collection chamber could have an outlet for discharging coolant.

The modular nature of such a cooling system has the advantage that individual cooling modules may be removed from the reactor shell, for example for replacement, maintenance or repair purposes. Furthermore, the reactor shell and cooling modules may be manufactured and transported separately.

The number and size of circulation tubes in a cooling module is limited only by the cooling requirements of particular circumstances and physical constraints of manufacture. Typically a cooling module could comprise between about 10 and about 4,000 circulation tubes, preferably between about 100 and about 400. Depending on the volume and capacity of the reactor, each cooling tube may be about 4 to about 40 m in length. Preferably the cooling tubes are from about 10 to about 25 m in length. While maintaining strength and physical integrity under the operating conditions of the reactor, the cooling tubes are preferably as thin as possible in order to facilitate efficient heat transfer and to minimise the overall weight of the cooling module. In order to maximise the reaction volume within a reactor the diameter of each circulation tube should be as small as possible, for example, from about 1 to about 10 cm, preferably from about 2 to about 5 cm.

The shape, size and configuration of the vertical pipes and/or any cooling modules and their arrangement within a reactor will be governed primarily by factors such as the capacity, operating conditions and cooling requirements of the reactor. The cooling module may have any cross section which provides for efficient packing of cooling modules within a reactor, for example, the cooling module may be of square, rectangular or hexagonal cross section. A cooling module design that incorporates a square cross section is advantageous in terms of packing the modules within the reactor and in providing uniform cooling throughout the reactor volume. The cross sectional area of a cooling module may typically be about 0.20 to 2.00 m2 depending upon the number and configuration of cooling tubes employed and the cooling capacity required.

Preferably, the vertical pipes are wholly or substantially parallel to the vertical axis of the reaction vessel.

By using the vertical pipes for heat transfer also, especially for cooling in exothermic reactions, the pipes provide the best agreement between the optimum arrangement of heat transfer pipes in a large reaction vessel, and providing some compartmentalisation of the reaction vessel, and so optimum homogeneous mixing of the reactants.

The pipes maybe of any suitable size, shape and design. This includes having a cross-sectional shape which is circular, square, or otherwise polygonal. The cross-section or shape may not be regular, and may include one or more fins or the like extending therefrom.

The vertical pipes may also be partly, substantially or wholly hollow and/or heat conducting.

Whilst it is generally preferred that the pipes are separate within the main area of chemical reaction within the reaction vessel, so is to provide maximum surface area, two or more of the pipes maybe partly, substantially or wholly conjoined in a vertical direction. Although any conjunction of the pipes may reduce their overall surface area and perimeter, such as for being available for a heat transfer, such an arrangement may improve the effectiveness of the pipes to reduce backmixing and the like.

Without wishing to be restricted to a particular embodiment, the invention will now be described in further detail with reference to accompanying figures in which:
Figures 1 and 2 are calculated gas phase dispersion co-efficient graphs based on known correlation equations, and
Figure 3 is a gas phase dispersion co-efficient measurements based on the reactor described in Example 1 hereinafter.

Typically the reactor may be used for carrying out three phase slurry reactions, such as for example Fisher Tropsch type reactions. The gas reactant inlet means may comprise one or more spargers located at the base of the reactor shell and the liquid product outlet means may comprise one or more filters. The person skilled in the art will be familiar with suitable sparger and filter systems employed in three-phase slurry known reactors.

The average particle size of the catalyst particles may very between wide limits, depending inter alia on the type of slurry zone regime. Typically, the average particle size may range from 1µm to 2mm, preferably from 1µm to 1mm, but preferably less than 100µm.

If the average particle size is greater than 100µm, and the particles are not kept in suspension by a mechanical device, the slurry zone regime is commonly referred to as ebullating bed regime. Preferably, the average particle size in an ebullating bed regime is less than 600µm, more preferably in the range from 100 to 400µm. It will be appreciated that in general the larger the particle size of a particle, the smaller the chance that the particle escapes from the slurry zone into the freeboard zone. Thus, if an ebullating bed regime is employed, primarily fines of catalyst particles will escape to the freeboard zone.

If the average particle size is at most 100µm, and the particles are not kept in suspension by a mechanical device, the slurry zone regime is commonly referred to as a slurry phase regime. Preferably, the average particle size in a slurry phase regime is more than 5pm, more preferably in the range from 10 to 75µm.

If the particles are kept in suspension in the zone below the pipes by a mechanical device, the slurry zone regime is commonly referred to as stirred tank regime. This is a less preferred situation. It will be appreciated that in principle any average particle size within the above ranges can be applied. Preferably, the average particle size is kept in the range from 1 to 200pm.

The concentration of catalyst particles present in the slurry may range from 5 to 45% by volume, preferably, from 10 to 35% by volume. It may be desired to add in addition other particles to the slurry, as set out in for example European Patent Application Publication No. 0 450 859. The total concentration of solid particles in the slurry is typically not more than 50% by volume, preferably not more than 45% by volume but greater than 15%: preferably in the range 20 to 40%.

The exothermic reaction is a reaction which is carried out in the presence of a solid catalyst, and which is capable of being carried out in a three-phase slurry reactor. Typically, at least one of the reactants of the exothermic reaction is gaseous. Examples of exothermic reactions include hydrogenation reactions, hydroformylation, alkanol synthesis, the preparation of aromatic urethanes using carbon monoxide, Kőlbel-Engelhardt synthesis, polyolefin synthesis, and Fischer-Tropsch synthesis. According to a preferred embodiment of the present invention, the exothermic reaction is a Fischer-Tropsch synthesis reaction.

The Fischer-Tropsch synthesis is well known to those skilled in the art and involves synthesis of hydrocarbons from a gaseous mixture of hydrogen and carbon monoxide, by contacting that mixture at reaction conditions with a Fischer-Tropsch catalyst. Suitable slurry liquids are known to those skilled in the art. Typically, at least a part of the slurry liquid is a reaction product of the exothermic reaction. Preferably, the slurry liquid is substantially completely a reaction product (or products).

Examples of products of the Fischer-Tropsch synthesis (for a low temperature Co based system) may range from methane to heavy paraffinic waxes. Preferably in the case of a Co based catalyst, the production of methane is minimised and a substantial portion of the hydrocarbons produced have a carbon chain length of at least 5 carbon atoms. Preferably, the amount of C₅+ hydrocarbons is at least 60% by weight of the total product, more preferably, at least 70% by weight, even more preferably, at least 80% by weight, most preferably at least 85% by weight.

Fischer-Tropsch catalysts are known in the art, and typically include a Group VIII metal component, preferably cobalt, iron and/or ruthenium, more preferably cobalt. Typically the porous catalyst element and each porous catalyst element comprise a carrier material such as a porous inorganic refractory oxide, preferably alumina, silica, titania, zirconia or mixtures thereof.

The catalytically active material may be present together with one or more metal promoters or cocatalysts. The promoters may be present as metals or as the metal oxide, depending upon the particular promoter concerned. Suitable promoters include oxides of metals from Groups IIA, IIIB, IVB, VB, VIB and/or VIIB of the Periodic Table, oxides of the lanthanides and/or the actinides. Preferably, the catalyst comprises at least one of an element in Group IVB, VB and/or VIIB of the Periodic Table, in particular titanium, zirconium, manganese and/or vanadium. As an alternative or in addition to the metal oxide promoter, the catalyst may comprise a metal promoter selected from Groups VIIIB and/or VIII of the Periodic Table. Preferred metal promoters include rhenium, platinum and palladium.

A most suitable catalyst material comprises cobalt and zirconium as a promoter. Another most suitable catalyst comprises cobalt and manganese and/or vanadium as a promoter.

The promoter, if present, is typically present in an amount of from 0.1 to 60 parts by weight per 100 parts by weight of carrier material and preferably from 0.5 to 40 parts by weight per 100 parts of carrier material. It will however be appreciated that the optimum amount of promoter may vary for the respective elements which act as promoter. If the catalyst comprises cobalt as the catalytically active metal and manganese and/or vanadium as promoter, the cobalt: (manganese + vanadium) atomic ratio is advantageously at least 12:1.

The Fischer-Tropsch synthesis is preferably carried out at a temperature in the range from 125 to 350 °C, more preferably 175 to 275 °C, most preferably 200 to 260 °C. The pressure preferably ranges from 5 to 150 bar abs., more preferably from 5 to 80 bar abs.

Hydrogen and carbon monoxide (synthesis gas) is typically fed to a slurry reactor at a molar ratio in the range from 0.4 to 2.5. Preferably, the hydrogen to carbon monoxide molar ratio is in the range from 1.0 to 2.5.

The gaseous hourly space velocity may vary within wide ranges and is typically in the range from 500 to 20,000 NI/l/h preferably in the range from 700 to 10,000 NI/l/h (with reference to the volume of porous catalyst elements and the spaces thereinbetween).

Preferably, the superficial gas velocity of the synthesis gas is in the range from 0.5 to 50 cm/sec, more preferably in the range from 5 to 35 cm/sec with reference to the cross section of the catalyst structure (i.e. the cross section of the reactor minus the cross section occupied by the cooling tubes and any other internal components).

Typically, the superficial liquid velocity is kept in the range from 0.001 to 4.00 cm/sec, including liquid production. It will be appreciated that the preferred range may depend on the preferred mode of operation.

According to one preferred embodiment, the superficial liquid velocity is kept in the range from 0.005 to 1.0 cm/sec.

### Example 1

The axial gas dispersion coefficient was determined in a three phase bubble slurry reactor from radioactive gas trace experiments. The experiments were carried out in a rector having an internal diameter of 1.8 m and a total height of approximately 6.5 m, operated with a slurry height of between approximately 5 m and approximately 5.5 m. In this column, the reactor zone was divided into three compartments by tridiagonal division from the centre, such that the effective compartment diameter was approximately 90 cm. Within each compartment, there was a bundle of 90 tubes, the outer diameter of each tube being 60.33 mm. The system used water/nitrogen/catalyst (pore volume 0.324 l/kg, particle density 1350kg/m³, size 40 micron). Solids hold-up vol.% was on a L+S basis. Radioactive tracer Ar41 was injected in the sparger, with Na-scintillation detectors located along column wall at heights: H=1.6 m, H=3.0 m and H=4.4 m.

Measurements were made at different slurry concentrations of 0%, 10%, 20% and 30%.

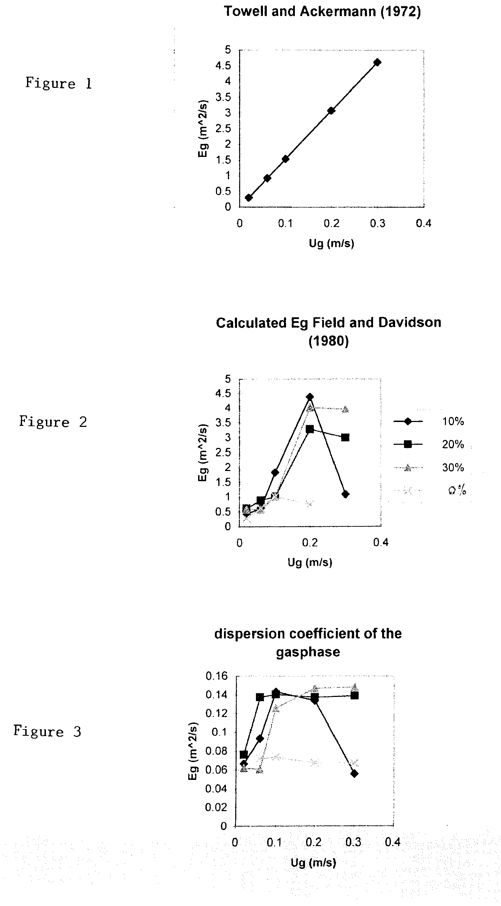

To calculate the gas phase dispersion co-efficients, different correlations have been used in the art. Reference is made to page 271 of 'Gas-Liquid Solid Fluidization Engineering, from Liang-Shih Fan of Ohio State University, published by Butterworths (1989). This gives correlation equations from four different investigators, in particular Towell and Ackerman, and Field and Davidson. Using their correlation equations, figures 1 and 2 provide calculations for the expected axial gas phase dispersion co-efficients at different slurry concentrations, based on superficial nitrogen velocity through the relevant section (Ugs in m/s). In the Field and Davidson correlations the measured gas-hold up date were used.

However, figure 3 provides actual gas phase dispersion co-efficients measured. These are significantly different to the calculated estimates. Instead of the calculated axial gas dispersion coefficient measurements increasing above 1, 2, 3 or even 4 m2/s as the superficial nitrogen velocity speed increases, figure 3 shows that the gas phase dispersion co-efficients achieved by the present invention do not rise above 0.16 m2/s for all slurry concentrations. The measured values are clearly much lower that the predicted values using correlation calculations known in the art. This benefit is a result of the presence of the tubes in the reactor, which are functioning as "guidance means" for the gas bubbles. The much lower gas dispersion coefficients result in a higher Peclet number, which means that the regime in the reactor very much goes in the direction of a plug flow reactor as desired for three phase slurry columns. See also EP 450-860 B2. Greater statis of the reactants increases the productivity in the reactor.

Figures 1 and 2 are calculated gas phase dispersion co-efficient graphs based on known correlation equations, and
Figure 3 is a gas phase dispersion co-efficient measurements based on the reactor described in Example 1 hereinafter.

## Claims

1. A reactor for carrying out a chemical reaction in a three phase slurry system, the reactor comprising:
(a) a reaction vessel having a freeboard zone and a slurry zone, the slurry zone having a diameter of at least 0.5 m, preferably greater than 1 m, more preferably greater than 2 m, and a height of at least 5 m preferably at least 10 m,
(b) a gas inlet means at or near the bottom of the reaction vessel,
(c) a gas outlet at or near the top of the reaction vessel,
(d) a plurality of vertical pipes within the slurry zone, the pipes having a diameter of from about 1cm to about 20 cm, and a total perimeter of from about 1000 to about 4000 cm/m², one or more of the vertical pipes including a heat transfer medium; and optionally
(e) a liquid outlet means.

2. A reactor as claimed in claim 1 wherein all of the vertical pipes include a heat transfer medium.

3. A reactor as claimed in claim 1 or claim 2 wherein the diameter of each vertical pipe is from about 1 to 10 cm, preferably from about 2 to about 5 cm.

4. A reactor as claimed in any one of the preceding claims wherein the total perimeter the vertical pipes is between 1300 and 3600 cm/m², preferably from about 1600 to about 3200 cm/m².

5. A reactor as claimed in any one of the preceding claims wherein the gas inlet means comprises one or more gas introduction ports in the reaction vessel, preferably wherein there is at least one gas introduction port per square metre, preferably 4/m2.

6. A reactor as claimed in any one of the preceding claims wherein the gas inlet means provides introduction of the gas wholly or substantially evenly across the bottom end of the reaction vessel, preferably as close as possible to the bottom of the reaction vessel.

7. A reactor as claimed in any one of the preceding claims wherein one or more of the vertical pipes provide a heat transfer action, preferably wherein the heat transfer action is a cooling action, more preferably wherein the or each vertical pipe providing a heat transfer action conducts a heat transfer medium therewithin.

8. A reactor as claimed in any one of the preceding claims wherein the three phase slurry system is a three phase slurry bubble column.

9. A reactor as claimed in any one of the preceding claims wherein the vertical pipes are arranged in one or more modules, each module comprising about 20-4000 tubes, preferably between about 100-400 tubes.

10. A process for carrying out an exothermic reaction comprising the steps of: charging a reactor with reactants; cooling the contents of the reactor and removing products from the reactor, wherein the reactor is as defined in any one of claims 1 to 9, preferably a process for the synthesis of hydrocarbons wherein the reactor is charged with syngas.

11. A process as claimed in claim 10 wherein the superficial gas velocity is in the range from 0.5 to 50cm/sec, preferably 5 to 40cm/sec, more preferably 20-30 cm/sec, especially wherein the concentration of slurry in the slurry zone of the reactor is at least 15%, preferably in the range 20 to 40%.

12. A process for the preparation of hydrocarbons by reaction of carbon monoxide and hydrogen over an iron or cobalt catalyst at elevated temperature and pressure, preferably a cobalt catalyst, in which process a reactor is used according to any of claims 1 to 9.

## Patentansprüche

1. Reaktor zum Durchführen einer chemischen Reaktion in einem Dreiphasenaufschlämmungssystem, wobei der Reaktor Folgendes umfasst:
(a) einen Reaktionsbehälter mit einer Freiraumzone und einer Aufschlämmungszone, wobei die Aufschlämmungszone einen Durchmesser von mindestens 0,5 m, bevorzugt mehr als 1 m, mehr bevorzugt mehr als 2 m und eine Höhe von mindestens 5 m, bevorzugt mindestens 10 m aufweist,
(b) ein Gaseinlassmittel am oder nahe dem Boden des Reaktionsbehälters,
(c) einen Gasauslass an oder nahe der Oberseite des Reaktionsbehälters,
(d) mehrere vertikale Rohre innerhalb der Aufschlämmungszone, wobei die Rohre einen Durchmesser von etwa 1 cm bis etwa 20 cm und einen Gesamtumfang von etwa 1000 bis etwa 4000 cm/m² aufweisen, wobei eines oder mehrere der vertikalen Rohre ein Wärmeübertragungsmedium beinhalten; und gegebenenfalls
e) ein Flüssigkeitsauslassmittel.

2. Reaktor nach Anspruch 1, wobei alle vertikalen Rohre ein Wärmeübertragungsmedium beinhalten.

3. Reaktor nach Anspruch 1 oder Anspruch 2, wobei der Durchmesser jedes vertikalen Rohres etwa 1 bis 10 cm, bevorzugt etwa 2 bis etwa 5 cm, beträgt.

4. Reaktor nach einem der vorangehenden Ansprüche, wobei der Gesamtumfang der vertikalen Rohre zwischen 1300 und 3600 cm/m², bevorzugt zwischen etwa 1600 und etwa 3200 cm/m², liegt.

5. Reaktor nach einem der vorangehenden Ansprüche, wobei das Gaseinlassmittel eine oder mehrere Gaseinlassöffnungen in dem Reaktionsbehälter umfasst, wobei bevorzugt mindestens eine Gaseinlassöffnung pro Quadratmeter, bevorzugt 4/m2, vorhanden ist.

6. Reaktor nach einem der vorangehenden Ansprüche, wobei das Gaseinlassmittel das Einleiten des Gases ganz oder im Wesentlichen gleichmäßig über das untere Ende des Reaktionsbehälters, bevorzugt so nahe wie möglich am Boden des Reaktionsbehälters, ermöglicht.

7. Reaktor nach einem der vorangehenden Ansprüche, wobei eines oder mehrere der vertikalen Rohre eine Wärmeübertragungswirkung bereitstellen, wobei bevorzugt die Wärmeübertragungswirkung eine Kühlwirkung ist, wobei mehr bevorzugt das oder jedes vertikale Rohr, das eine Wärmeübertragungswirkung bereitstellt, dort ein Wärmeübertragungsmedium darin leitet.

8. Reaktor nach einem der vorhergehenden Ansprüche, wobei das Dreiphasenaufschlämmungssystem eine Dreiphasenaufschlämmungs-Blasenkolonne ist.

9. Reaktor nach einem der vorstehenden Ansprüche, wobei die vertikalen Rohre in einem oder mehreren Modulen angeordnet sind, wobei jedes Modul etwa 20 bis 4000 Rohre, bevorzugt zwischen etwa 100 bis 400 Rohre, umfasst.

10. Verfahren zum Durchführen einer exothermen Reaktion, umfassend die folgenden Schritte:
Beschicken eines Reaktors mit Reaktanden;
Kühlen des Reaktorinhalts und Entfernen von Produkten aus dem Reaktor, wobei der Reaktor nach einem der Ansprüche 1 bis 9 definiert ist, bevorzugt ein Verfahren zur Synthese von Kohlenwasserstoffen, wobei der Reaktor mit Synthesegas beschickt wird.

11. Verfahren nach Anspruch 10, wobei die Oberflächengasgeschwindigkeit im Bereich von 0,5 bis 50 cm/s, bevorzugt 5 bis 40 cm/s, mehr bevorzugt 20 bis 30 cm/s, liegt, insbesondere wobei die Konzentration der Aufschlämmung in der Aufschlämmungszone des Reaktors mindestens 15 %, bevorzugt im Bereich von 20 bis 40 %, liegt.

12. Verfahren zum Herstellen von Kohlenwasserstoffen durch Umsetzen von Kohlenmonoxid und Wasserstoff über einem Eisen- oder Kobaltkatalysator bei erhöhter Temperatur und erhöhtem Druck, bevorzugt einem Kobaltkatalysator, wobei bei diesem Verfahren ein Reaktor nach einem der Ansprüche 1 bis 9 verwendet wird.

## Revendications

1. Réacteur permettant de réaliser une réaction chimique dans un système de suspension en trois phases, le réacteur comprenant :
(a) une cuve de réaction pourvue d'une zone de revanche et d'une zone de suspension, la zone de suspension ayant un diamètre d'au moins 0,5 m, de préférence supérieur à 1 m et de manière encore plus préférable supérieur à 2 m, et une hauteur d'au moins 5 m, de préférence d'au moins 10 m,
(b) un moyen d'entrée de gaz situé au niveau ou à proximité du fond de la cuve de réaction,
(c) une sortie de gaz située au niveau ou à proximité de la partie supérieure de la cuve de réaction,
(d) une pluralité de tuyaux verticaux situés à l'intérieur de la zone de suspension, les tuyaux ayant un diamètre compris entre environ 1 cm et environ 20 cm et un périmètre total compris entre environ 1 000 et environ 4 000 cm/m², un ou plusieurs des tuyau(x) vertical/verticaux contenant un fluide de transfert de chaleur ; et éventuellement
(e) un moyen de sortie de liquide.

2. Réacteur selon la revendication 1 dans lequel tous les tuyaux verticaux contiennent un fluide de transfert de chaleur.

3. Réacteur selon la revendication 1 ou la revendication 2 dans lequel le diamètre de chaque tuyau vertical est compris entre environ 1 et 10 cm, de préférence entre environ 2 et environ 5 cm.

4. Réacteur selon l'une quelconque des revendications précédentes dans lequel le périmètre total des tuyaux verticaux est compris entre 1 300 et 3 600 cm/m², de préférence entre environ 1 600 et environ 3 200 cm/m².

5. Réacteur selon l'une quelconque des revendications précédentes dans lequel le moyen d'entrée de gaz comprend un ou plusieurs orifice(s) d'introduction de gaz dans la cuve de réaction, de préférence dans lequel il existe au moins un orifice d'introduction de gaz par mètre carré, de préférence 4/m2.

6. Réacteur selon l'une quelconque des revendications précédentes dans lequel le moyen d'entrée de gaz permet l'introduction entièrement ou sensiblement homogène du gaz jusqu'au fond de la cuve de réaction, de préférence le plus près possible du fond de la cuve de réaction.

7. Réacteur selon l'une quelconque des revendications précédentes, dans lequel un ou plusieurs des tuyaux verticaux permettent une action de transfert de chaleur, de préférence dans lequel l'action de transfert de chaleur est une action de refroidissement, de manière plus préférable dans lequel le tuyau vertical ou chaque tuyau vertical permettant une action de transfert de chaleur achemine un fluide de transfert de chaleur à l'intérieur de celui-ci.

8. Réacteur selon l'une quelconque des revendications précédentes dans lequel le système de suspension en trois phases est une colonne à bulles de suspension en trois phases.

9. Réacteur selon l'une quelconque des revendications précédentes dans lequel les tuyaux verticaux sont agencés dans un ou plusieurs module(s), chaque module comprenant environ 20 à 4 000 tubes, de préférence entre environ 100 et 400 tubes.

10. Procédé de réalisation d'une réaction exothermique comprenant les étapes suivantes : charger un réacteur avec des réactifs ; refroidir les contenus du réacteur et retirer les produits du réacteur, le réacteur étant tel que défini selon l'une quelconque des revendications 1 à 9, de préférence un procédé de synthèse d'hydrocarbures dans lequel le réacteur est chargé avec du gaz de synthèse.

11. Procédé selon la revendication 10 dans lequel la vitesse superficielle du gaz est dans la plage comprise entre 0,5 et 50 cm/sec, de préférence entre 5 et 40 cm/sec, de manière encore plus préférable entre 20 et 30 cm/sec, la concentration de suspension dans la zone de suspension du réacteur étant en particulier au moins de 15 %, de préférence dans la plage comprise entre 20 et 40 %.

12. Procédé de préparation d'hydrocarbures par réaction de monoxyde de carbone et d'hydrogène sur un catalyseur à base de fer ou de cobalt à une température et à une pression élevées, de préférence un catalyseur à base de cobalt, ledit procédé utilisant un réacteur selon l'une quelconque des revendications 1 à 9.
